# EUROPEAN PATENT SPECIFICATION

(11) **EP 3 448 301 B1**
(45) Date of publication and mention of the grant of the patent: **09.12.2020**
(21) Application number: 17720484.9
(22) Date of filing: 28.04.2017
(51) Int. Cl.: A61C 13/00

(54) **SYSTEM AND METHOD FOR MANUFACTURING DENTAL DEVICE**
SYSTEM UND VERFAHREN ZUR HERSTELLUNG EINER DENTALVORRICHTUNG
SYSTÈME ET PROCÉDÉ DE FABRICATION D'UN APPAREIL DENTAIRE

(30) Priority: 28.04.2016 US 201662328779 P
(43) Date of publication of application: 06.03.2019
(73) Proprietor: Straumann Holding AG, 4002 Basel (CH)
(72) Inventor: BUSCHMANN, Daniel, 4002 Basel (CH); MEIER, Marcus, 4002 Basel (CH)
(74) Representative: Michalski Hüttermann & Partner Patentanwälte mbB
(86) International application number: PCT/EP2017/060269
(87) International publication number: WO 2017/186945

(56) References cited:
- DE-A1-102012 108 217
- KR-A- 20130 021 855
- US-A1- 2008 241 798
- US-A1- 2015 093 719

## Description

### Technical Field

The present disclosure relates generally to a manufacturing system and, more particularly, to a system and method for manufacturing dental devices including prostheses, support structures, and drill or surgical templates, and to dental devices and workpieces for use in manufacturing dental devices.

### Background

Additive manufacturing is a process of creating three-dimensional components by depositing overlapping layers of material, typically under the guided control of a computer. One technique of additive manufacturing is known as direct metal laser sintering (DMLS). The DMLS technique uses a laser to direct a high-energy beam into a powdered metal medium at precise locations corresponding to features and dimensions of the component to be manufactured. As the energy beam contacts the powdered metal, the powdered metal is caused to melt and weld together and to previously melted layers of the component.

In some situations, a component created via DMLS is complete, with no additional manufacturing steps being required. In other situations, however, for example in situations where tight tolerances on size and/or form are required, additional manufacturing steps may be taken. These steps may include mounting of the printed component within a milling machine and cutting away of external surfaces until the desired tolerances are achieved.

DMLS and conventional milling operations have been used together to create dental prostheses. For example, U.S. Patent No. 8,021,154 of Holzner et al. that issued on September 20, 2011 (the "' 154 patent") describes using laser sintering to produce one or more dental prostheses inside of a square frame that is also produced via the same laser sintering. The prostheses are connected to sides of the square frame by way of webbing. After sintering is complete, the prostheses, the webbing, and the square frame can then be transferred into and clamped as a single workpiece within a milling machine. References formed on the frame during the laser sintering process are used to position the prostheses for subsequent milling of final surface finishes. When milling is complete, the webbing is broken away from the prostheses at corresponding break-away areas. Each completed prosthesis may then be installed within a corresponding patient's mouth (e.g., by way of screws), and porcelain covers can be attached to the prosthesis.

DE 10 2012 108 217 A1 describes a method for producing a workpiece comprising producing the workpiece by additive manufacturing based on digitalized data in free-form technology, simultaneously producing a fixing structure originating from the workpiece, fixing the workpiece by the fixing structure in the processing device, and post-processing in a processing device using the digitized data.

US 2015/093719 A1 describes a method of manufacturing an article including taking an article in an initial state formed using an additive manufacturing process, the article including at least one set of mounting features and performing a second manufacturing process to transform the article into a second state.

The disclosed workpiece, system, and method are directed to overcoming one or more of the problems set forth above and/or other problems of the prior art.

### Summary

The invention is defined by the features of the independent claims. Preferred embodiments are defined by the features of the dependent claims.

In one aspect, workpiece used to manufacture a dental device, comprises a ring- shaped frame; a base form of the dental device additively manufactured inside the ring- shaped frame; and at least one connector extending between the base form and the ring- shaped frame.

The base form can be laser sintered inside the ring-shaped frame from a powdered metal. The at least one connector can be additively manufactured together with the base form. The ring-shaped frame can be additively manufactured together with the base form and the at least one connector. The ring-shaped frame can be manufactured via a non-additive process, prior to manufacturing of the base form.

In one embodiment of the workpiece, the base form has a convex curvature oriented toward a center axis of the ring-shaped frame; the dental device is a first dental device; the at least one connector includes at least a first connector; and the workpiece further includes a base form of at least a second dental device nested inside the base form of the first dental device; and at least a second connector extending between the base form of the first dental device and the base form of the at least a second dental device.

The first dental device can correspond to a particular patient and can be one of a superstructure; and a substructure configured to support the superstructure; and the at least a second dental device can be a template used to install the first dental device in a mouth of the particular patient.

The ring-shaped frame can extend only partially around the base form of the dental device. The ring-shaped frame can be manufactured from a first material different than a second material of the base form.

The workpiece can further include at least one additively manufactured reference feature associated with the ring-shaped frame. The at least one additively manufactured reference feature can includes at least a first reference feature used to position the workpiece for subsequent machining; and at least a second reference feature having a configuration different from the at least a first reference feature and being used to recognize an orientation of the workpiece during the subsequent machining.

The at least one additively manufactured reference feature can include a plurality of reference features equally-spaced around a perimeter of the ring-shaped frame.

The dental device can include at least one machined surface corresponding to one of an implant abutment face, a threaded bore, and a cusp surface.

The dental device can be one of a superstructure, a substructure used for mounting of the superstructure, and a template used to install the dental device.

The workpiece can further include a threaded fastener additively manufactured inside the base form.

A system for manufacturing a dental device, comprises an additive machine configured to manufacture a base form of the dental device inside of a ring-shaped frame; and a removal machine configured to receive the ring-shaped frame and to remove material from select surfaces of the base form to produce the dental device.

The additive machine can be configured to sinter the base form inside the ring-shaped frame from a powdered metal; and can be further configured to sinter at least one connector between the base form and the ring-shaped frame. The additive machine can be further configured to sinter the ring-shaped frame together with the base form and the at least one connector. The ring-shaped frame can be manufactured via a non-additive process and loaded into the additive machine prior to sintering of the base form. The ring-shaped frame can be manufactured from a first material different than a second material of the base form.

In the inventive system, the dental device is one of a superstructure and a substructure used for mounting of the superstructure and corresponding to a particular patient; and the additive machine is configured to manufacture a template inside the ring-shaped frame, the template being used to install the dental device in a mouth of the particular patient.

The additive machine can be configured to manufacture at least a portion of the base form via an opening through a periphery of the ring-shaped frame.

The additive machine can be configured to manufacture a reference feature associated with the ring-shaped frame for use in placing the base form inside the removal machine or detecting an orientation of the base form inside the removal machine. The system can further include a transfer machine configured to transfer the base form and the ring-shaped frame from the additive machine to the removal machine based on a location of the reference feature.

Select surfaces of the base form can correspond to one of an implant abutment face, a threaded bore, or a cusp surface.

The dental device can be one of a superstructure, a substructure used for mounting of the superstructure, and a template used to install the dental device.

The additive machine can be further configured to additively manufacture a threaded fastener inside the base form.

A method for manufacturing a dental device, comprises additively manufacturing a base form of the dental device inside of a ring-shaped frame; transferring the base form and the ring-shaped frame as a single workpiece into a removal machine; and removing material from select surfaces of the base form while the single workpiece is inside the removal machine.

Additively manufacturing the base form can include sintering the base form from a powdered metal, optionally further including sintering at least one connector between the base form and the ring-shaped frame, and further optionally including sintering the ring-shaped frame together with the base form and the at least one connector or prefabricating the ring-shaped frame from via a non-additive process prior to sintering of the base form inside the ring-shaped frame. Prefabricating the ring-shaped frame can include prefabricating the ring-shaped frame from a first material different than a second material of the base form.

The dental device can corresponds to a particular patient and can be one of a superstructure; and a substructure configured to provide mounting for the superstructure; and the method of the invention includes additively manufacturing a template inside the ring-shaped frame for use in installing the dental device in a mouth of the particular patient.

Removing material from select surfaces of the base form can include removing material from at least a portion of the base form via an opening through a periphery of the ring-shaped frame.

The method can further include additively manufacturing a reference feature associated with the ring-shaped frame for use in placing the base form before removing material from select surfaces of the base form.

Removing material from select surfaces of the base form can include removing material from only an implant abutment surface or a fastener engagement surface.

The dental device can be one of a superstructure, a substructure configured to provide mounting for the superstructure, and a template used to install the dental device.

The method can further include additively manufacturing a threaded fastener inside the base form.

### Brief Description of the Drawings

Figs. 1-3 are perspective illustrations of exemplary disclosed dental devices;
Fig. 4 is a diagrammatic illustration of an exemplary disclosed system for manufacturing a dental workpiece;
Figs. 5 and 6 are simplified perspective illustrations of exemplary dental workpieces that may be processed by the system of Fig. 4 to make the dental devices of Figs. 1-3; and
Figs. 7-9 are simplified plan, side, and cross-sectional illustrations, respectively, of another exemplary disclosed workpiece that may be processed by the system of Fig. 4 to manufacture the dental devices of Figs. 1-3.

### Detailed Description

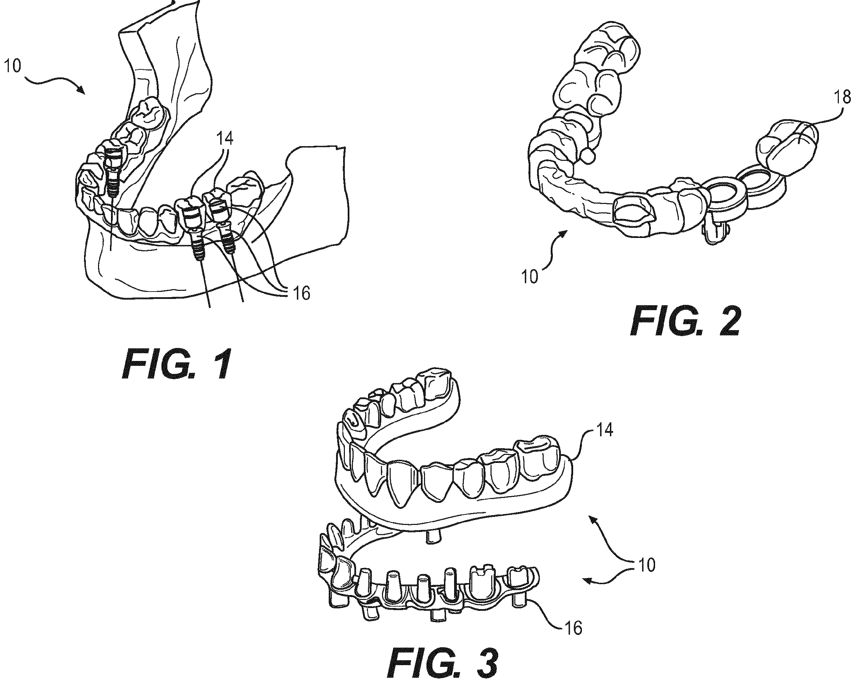

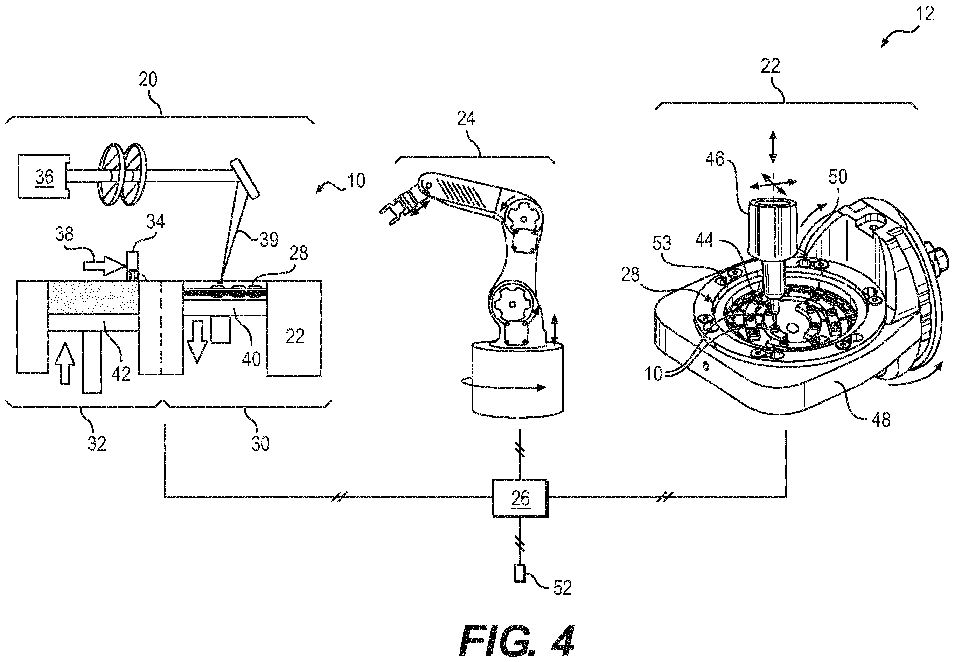

Figs. 1, 2, and 3 illustrate different dental devices 10 that can be manufactured by an exemplary system 12, which is shown in Fig. 4 and described in detail below. Dental devices 10 of Figs. 1-3 may be manufactured from any type of material to have any desired shape. For example, dental devices 10 may be manufactured from a metal, such as titanium, a titanium/aluminum/vanadium alloy, a titanium/aluminum/niobium alloy, a titanium/zirconium alloy, a cobalt/chromium alloy, or another similar alloy. It is also contemplated that dental devices 10 could alternatively be manufactured from a non-metallic material, for example from a ceramic, a plastic, or a composite, as desired. Dental devices 10 may include, among other things, superstructures (e.g., bridges, crowns, dentures, and other prostheses) 14, substructures (e.g., abutments, bars, implants, screws, and other similar structures) 16 configured to provide mounting for superstructures 14, and templates (e.g., drill and/or surgical templates) 18 used to prepare a patient's mouth for receiving the other dental devices 10. It should be noted that most dental devices 10 are uniquely designed (e.g., sized, shaped, and/or finished) for a particular patient based on x-rays of the patient's underlying bone structure and/or 3-D scans of the patient's mouth. Accordingly, the x-rays, scan images, and other similar digital data may at least partially define dental devices 10, and care should be taken to manufacture dental devices 10 as close to the digital data as possible.

Fig. 4 illustrates system 12 as having multiple machines that cooperate during the manufacture of dental devices 10 (referring to Figs. 1-3). These machines include among other things, an additive machine ("machine") 20, a removal machine ("machine") 22, a transfer machine 24, and a controller 26 in communication with each of the other machines. As will be explained in more detail below, machine 20 may use the digital data associated with particular dental devices 10 to build up a corresponding 3-D workpiece 28, layer-by-layer; machine 22 may remove material from select surfaces of workpiece 28 based also on the digital data in order to produce the particular dental devices 10; transfer machine 24 may automatically move workpiece 28 from machine 20 to machine 22; and controller 26 may store the digital data. The controller 26 controls operations of machines 20-24. It is contemplated that transfer machine 24 could be omitted in some embodiments, if desired, and workpiece 28 manually transferred between machines 20 and 22. It is also contemplated that, instead of a centralized controller 26, each of machines 20-24 could have its own dedicated controller 26.

Machine 20 may take many different forms. In the disclosed exemplary embodiment, machine 20 is a sintering type of machine having a build chamber 30, a material chamber 32, a recoater 34, and an energy source 36. Recoater 34 may be configured to push powdered material from material chamber 32 into build chamber 30 (in a direction indicated by an arrow 38), and energy source 36 may selectively be activated to sinter (e.g., to melt) a pattern in the powder (e.g., by way of a laser beam 39) and thereby produce layers of solidified material forming workpiece 28. After each layer of material is solidified, a platform 40 in build chamber 30 (along with workpiece 28) may be incrementally lowered; a platform 42 in material chamber 32 (along with the powdered material) may be incrementally raised; and recoater 34 may push a new layer of powdered material over the solidified layer for sintering of a new layer of workpiece 28. It is also contemplated that machine 20 could embody another type of additive machine (e.g., a vat photo-polymerization machine, a material jetting machine, a binder jetting machine, a material extrusion machine, a directed energy deposition machine, or another machine), if desired.

Machine 22 may embody any type of machine known in the art that is used to remove material from select surfaces of dental devices 10. In the disclosed exemplary embodiment, machine 22 is a general or specific-use milling machine having a computer-controlled rotary cutter 44 that is configured to cut away material from the surfaces of dental devices 10. In particular, one or more actuators 46 may be connected to cutter 44 and/or to workpiece 28, and configured to spin cutter 44 about its own axis while also advancing teeth (not shown) of cutter 44 into the surfaces of workpiece 28 at desired locations. The spinning and/or translating of cutter 44 may be precisely controlled (e.g., via controller 26) based on the digital data defining workpiece 28 and/or dental device 10. It is contemplated that machine 22 could form a portion of a larger turning center, if desired, and have access to one or more automatic tool changers, tool carousels, coolant systems, debris collection, and enclosures. It is contemplated that another type of machine, for example a laser ablation machine (a.k.a., a laser milling machine) could also or alternatively be used to remove material from the surfaces of dental device 10, if desired.

In the disclosed exemplary embodiment, machine 22 includes a workpiece holder 48 configured to receive and secure workpiece 28 during the material-removal process by cutter 44 described above. In the disclosed example, a recess 50 is formed within workpiece holder 48 and designed to receive workpieces 28 of a standard size, shape, and/or configuration after fabrication within machine 20. In the disclosed exemplary embodiment, recess 50 is a generally cylindrical socket having a diameter and depth specifically associated with manufacture of dental devices 10. Recess 50 may be accessible to cutter 44 from one side or opposing sides, as desired. For example, holder 48 may have windows therein that allow cutter 44 to pass through and access dental devices 10 over a large area and/or from a wide range of angles. Holder 48 may be movable to allow the desired access (e.g., holder 48 may be configured to flip over) and/or cutter 44 may be moved to the side(s) of workpiece 28 requiring cutting, as desired. A flange 53, clamp, fastener, clip, or other similar device may be used to retain workpiece 28 inside recess 50 of holder 48.

The placement of workpiece 28 (or at least knowledge of the placement) inside of holder 48 may affect material removal from the surfaces of dental devices 10. For example, cutter 44 of machine 22 may be guided by controller 26 based on known geometry of workpiece 28 and also based on a known or assumed relative location between cutter 44 and each dental device 10. For this reason, machine 22 may be equipped with a way to locate and/or detect location of workpiece 28 during and/or after placement within recess 50. This may include, for example, reference features (not shown) formed in workpiece holder 48 (e.g., within and/or around recess 50) that are configured to engage workpiece 28 in a particular manner so as to precisely locate and/or orient workpiece 28. Alternatively or additionally, a scanner, imaging device, and/or measurement probe (not shown) may be used by machine 22 to detect the location of workpiece 28 after placement within holder 48. Other methods may also be used, if desired.

In the disclosed exemplary embodiment of Fig. 4, transfer machine 24 is a robotic arm capable of retrieving workpiece 28 from build chamber 30, moving workpiece 28 from machine 20 to machine 22, and placing workpiece 28 inside of recess 50. In an alternative exemplary embodiment (not shown), transfer machine 24 may be an overhead gantry capable of moving workpiece 28 in the same manner described above. Other embodiments may also be possible. It is contemplated that in some applications, transfer machine 24, in addition to moving workpiece 28, may also be configured to perform one or more additional processes (e.g., cleaning away of loose powdered material, detecting workpiece location, etc.) during movement of workpiece 28, if desired.

Controller 26 may embody a single processor or multiple processors that include a means for controlling an operation of system 12. Numerous commercially available processors may perform the functions of controller 26. Controller 26 may include or be associated with a memory for storing data such as, for example, the digital data associated with dental device 10 and/or workpiece 28, an operating condition of machines 20-24, design limits, performance characteristics or specifications, operational instructions, etc. Various other known circuits may be associated with controller 26, including power supply circuitry, signal-conditioning circuitry, solenoid driver circuitry, communication circuitry, and other appropriate circuitry. Moreover, controller 26 may be capable of communicating with other components of system 12 (e.g., with each of machines 20-24) via either wired or wireless transmission and, as such, controller 26 could be connected directly to machines 20-24 or alternatively disposed in a location remote from machines 20-24 and indirectly connected (e.g., wirelessly).

In some exemplary embodiments, controller 26 may rely on sensory information when regulating operations of machines 20-24. This sensory information may include, for example, a detected location and/or orientation of workpiece 28 (and/or dental devices 10) within build chamber 30, a detected location and/or orientation of work holder 48 and/or recess 50, and a tracked location and/or orientation of transfer machine 24 (e.g., a grasping hand of machine 24). The sensory information may be provided by way of one or more sensors 52, for example a proximity sensor, an actuator sensor, a measurement probe, a camera, etc. Signals generated by sensor(s) 52 may be directed to controller 26 for processing.

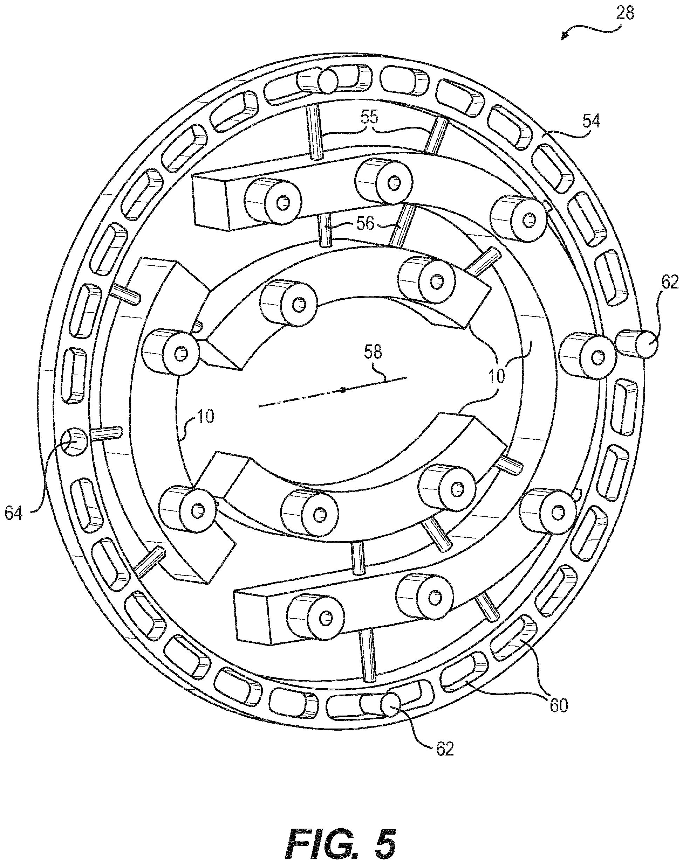

As shown in the exemplary embodiment of Fig. 5, workpiece 28 may include at least three primary components that are fabricated together as a single integral part. These components may include any number of dental devices 10, an outer frame 54, and one or more connectors 56 that extend between frame 54 and dental devices 10. It should be noted that, when workpiece 28 is initially formed by machine 20, dental devices 10 may be in their base forms only. That is, dental devices 10 may not yet have a final size, shape, and/or contour necessary for use within the patient's mouth. The base forms of dental devices 10 may have extra material at select locations where machine 22 will perform a finishing process. Frame 54 may function as a support structure for dental devices 10 (e.g., by way of connectors 56) during transfer between machines 20 and 22, as an adapter for use in placing dental devices 10 inside machine 24, and as a secure mount for dental devices 10 during the finishing process of machine 22. In some exemplary embodiments, frame 54 may also function as a shipping container during transport of dental devices 10 to a final-use destination (e.g., to a dentist's or oral surgeon's office) after the finishing process of machine 22 is complete.

Frame 54, in the exemplary embodiment of Fig. 5, completely encompasses the other components of workpiece 28. Frame 54 may have an outer diameter sized to fit within recess 50 of holder 48 and an inner diameter sized to provide a desired rigidity to support and/or space to accommodate a desired number and sizes of dental devices 10. Typically, the outer diameter of frame 54 is about 80 mm to about 125 mm. In some exemplary embodiments, an axial thickness (i.e., a thickness in a direction aligned with a center axis 58) of frame 54 may be less than its radial width (i.e., a distance between inner and outer radiuses) and also less than a corresponding height of dental devices 10 (i.e., a height in the axial direction of frame 54) formed therein. In these exemplary embodiments, frame 54 may be positioned at a base of dental devices 10, such that one face of frame 54 is generally co-planer with a base of dental devices 10. In other exemplary embodiments, however, frame 54 may be located about midway along the height of dental devices 10, such that both the base and a top of dental devices 10 protrude from opposing sides of frame 54.

In the disclosed examples, frame 54 is generally circular, having a perimeter that revolves around axis 58. This shape may be used to encompass and support dental devices 10 of any shape known in the art. As many dental devices 10 are naturally curved to match the natural contours of a patient's mouth, the circular shape of frame 54 may be particularly efficient when used with these devices 10. For example, greater support may be provided to dental devices 10 with less material and space when frame 54 has a curvature corresponding to the curvature of dental devices 10. It is contemplated, however, that frame 54 could have another shape (e.g., triangular, square, rectangular, etc.), if desired. In one example, an outer shape of frame 54 is generally triangularly shaped (e.g., triangular with rounded corners) and sized to fit within a corresponding triangularly shaped recess 50 of holder 48.

It is contemplated that a single dental device 10 or multiple dental devices 10 may be fabricated inside a single frame 54, as desired. By fabricating multiple dental devices 10 inside the same frame 54, greater efficiencies may be achieved. In the disclosed exemplary embodiments, multiple dental devices 10 are fabricated inside frame 54 and nested inside each other. For example, each of dental devices 10 shown in Fig. 5 have a convex curvature that is oriented toward axis 58, with an outer set of devices 10 located radially closer to frame 54 than a corresponding inner set of devices 10. The outer set of devices 10 may be joined to an inner annular face of frame 54 via connectors 56, while the inner set of devices 10 may be joined to the convex curvature of the outer set of devices 10. Although the inner set of devices 10 are not shown as being connected to each other (e.g., across a center space of frame 54), this may also be possible, if desired.

In some exemplary embodiments, the particular dental devices 10 formed within the same frame 54 may correspond with the same patient and/or the same surgical procedure. For example, a kit may be created by co-forming one or more superstructures 14, substructures 16, and/or templates 18 (referring to Figs. 1-3) for a single patient within the same frame 54. In this way, all parts of the kit may be fabricated at the same time, in the same location, from the same materials, and/or by the same machines, thereby providing for ease of part handling and inventory tracking, improved efficiency, enhanced accuracy, and better assembly fit. In some instances, the parts of a particular kit may even be transported together within frame 54 to the final-use destination.

It is contemplated that frame 54 may be fabricated in at least two different ways. In a first embodiment, frame 54 is fabricated within machine 20 at the same time that dental devices 10 and connectors 56 are also fabricated and from the same material. That is, frame 54 may be fabricated layer-by-layer together with each corresponding layer of dental devices 10 and connectors 56 and from the exact same powdered metal. In another embodiment, however, frame 54 may be fabricated before dental devices 10 and connectors 56. Frame 54 may still be fabricated by machine 20 using the same powdered metal, or fabricated by machine 20 using a material different from the other components of workpiece 28. Alternatively, frame 54 may be fabricated by a completely different machine and/or a different type of machine. For example, since the design of frame 54 may generally remain unchanged and be used with any design of dental devices 10, it may be more resource (e.g., time, material, and/or equipment) efficient to fabricate frame 54 using a cheaper material and/or a faster or cheaper process. For example, frame 54 could be a high-volume cast component that is placed into build chamber 30 of machine 20 after formation thereof. Dental devices 10 could then be fabricated and joined to frame 54 via connectors 56. In this example, connectors 56 could be fabricated layer-by-layer along with dental devices 10 or fabricated after dental devices 10 are completed, as desired. By fabricating connectors 56 after fabrication of dental devices 10, a material of connectors 56 could be different than a material of dental devices 10. It is contemplated that frame 54 could be reusable in some applications.

Frame 54 may include one or more reference features that can be used to locate and/or orient workpiece 28 within one or both of machines 20 and 22. Any number, style, and type of reference features may be formed within and/or on frame 54 and used for any purpose. Three different examples of these reference features are shown in Fig. 5, and include a series of first features 60, a series of second features 62, and at least a third feature 64. Features 60 are shown as indentations in an axial end face of frame 54. Features 60, in this example, consist of 48 elongated slots, each having a length direction oriented to follow an annular path around axis 58. Features 60 may be equally spaced around frame 54, and have a generally consistent shape and depth (e.g., within engineering tolerances). Features 62 are shown as protrusions that extend from the axial end face of frame 54 at particular locations. Features 62, in this example, consist of three cylindrical protrusions that are annularly spaced apart by about 90° and that extend a distance about equal to the depths of features 60. Feature 64 is shown as a hole passing completely through frame 54 in an axial direction. Feature 64 may be located about 90° away from adjacent features 62. Each of features 60-64 may be configured to engage corresponding features within machine 20 and/or 22. Alternatively, one or more of features 60-64 may function as a visual index. For example, features 60 may be used to position workpiece 28 within build chamber 30 of machine 20; features 62 may be used to position workpiece 28 within holder 48; and feature 64 may be used by controller 26 (e.g., via sensor 52) to detect the location and/or orientation of workpiece 28 within one or both of machines 20 and 22. It is contemplated that features 60 and/or features 62 could be located within only a single axial end face of frame 54 or within both axial end faces, as desired. It is further contemplated that any one or more of features 60-64 (or other reference features - not shown) could be located elsewhere within frame 54 (e.g., with an inner and/or outer annular surface), if desired. It is also contemplated that, in addition to be used for locating/orienting purposes, any one or more of features 60-64 could additionally or alternatively be used by transfer machine 24 for grasping workpiece 28.

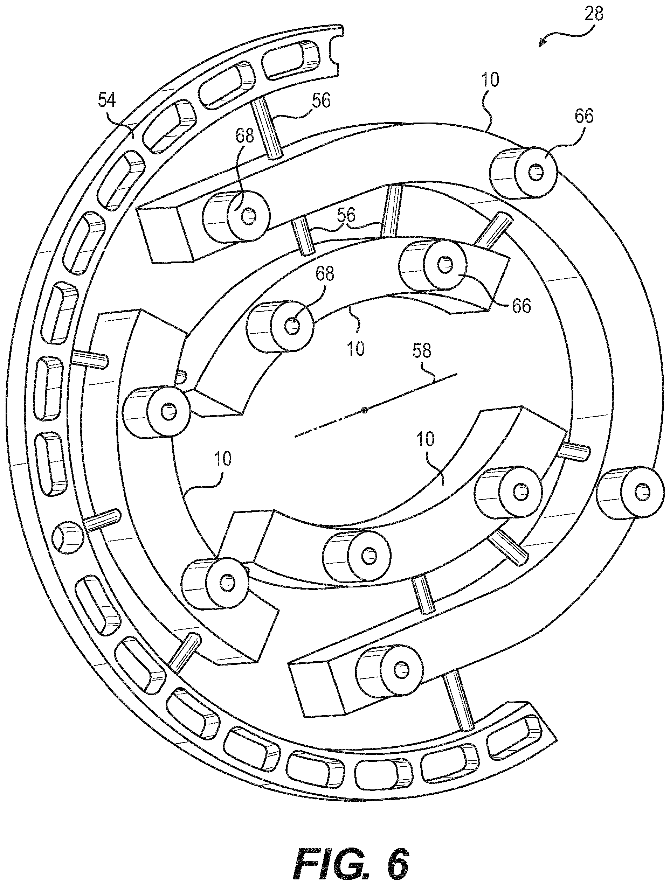

Fig. 6 illustrates an alternative embodiment of workpiece 28. Like workpiece 28 shown in Fig. 5, workpiece 28 shown in Fig. 6 may also include three primary components - frame 54, connectors 56, and dental devices 10. However, in contrast to the exemplary embodiment of Fig. 5, frame 54 shown in Fig. 6 does not completely encompass the other components. In particular, frame 54 of Fig. 6 may extend only partially around dental devices 10 in order to reduce an amount material and/or space consumed by frame 54 or to provide greater access for cutter 44 to reach dental devices 10. In one exemplary embodiment, frame 54 extends at least 180° around axis 58.

A majority of the features of dental devices 10 that are produced by machine 20 may be in their final form when the processes of machine 20 are complete. That is, relatively few features of dental devices 10 may actually need to be finished within machine 22. In the disclosed exemplary embodiment, only features of dental devices 10 that will engage other devices or existing dentistry in the patient's mouth may require tighter tolerances and/or finer surface finishes that are best achieved by machine 22. These features may include, for example, abutment faces 66, threaded bores 68, and/or cusp surfaces (not shown). Abutment faces 66 may mate tightly against faces of corresponding implants and, accordingly, accurate contours at these faces may be required for proper engagement. Threaded bores 68 may receive screws or other fasteners that are used to anchor dental devices 10 within the patient's mouth. Accordingly, proper alignment of the bores and crisp threading may be required to ensure a desired placement in relation to existing contours surrounding dental devices 10. The cusp surfaces may need to be accurate in order to ensure that damage to dental devices 10 and/or the surrounding dentistry does not occur during use. The remaining features of dental devices 10 may remain as-sintered when workpiece 28 emerges from machine 22. In some exemplary embodiments, the as-sintered surfaces, being rougher than as-milled surfaces, may actually improve bonding with cosmetic veneers or other similar outer covers.

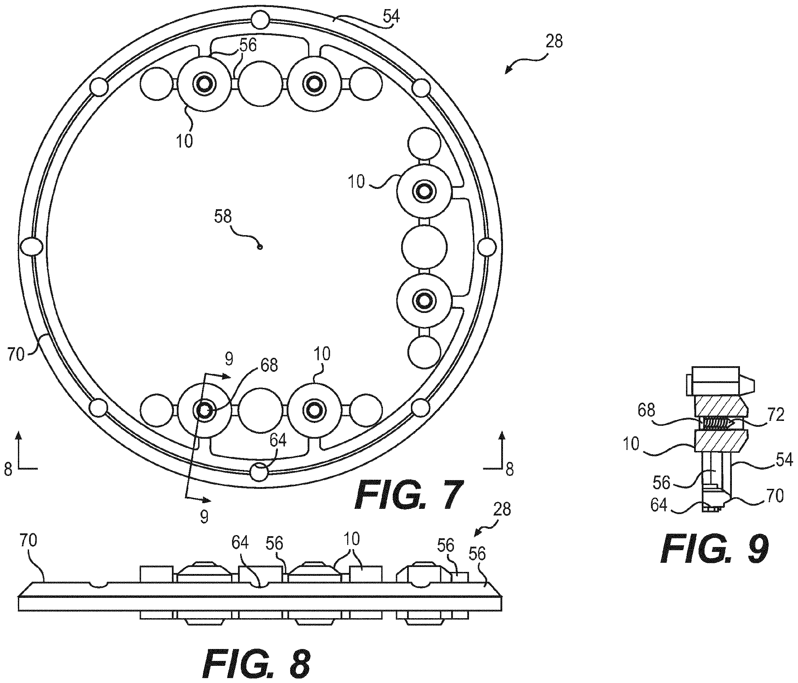

Figs. 7-9 illustrate another exemplary embodiment of workpiece 28. Like workpiece 28 shown in the exemplary embodiments of Figs. 5 and 6, workpiece 28 shown in Figs. 7-9 may also include three primary components - frame 54, connectors 56, and dental devices 10. However, in contrast to the other embodiments, dental devices 10 of Figs. 7-9 do not have lateral curvature. In this embodiment, instead of connectors 56 extending radially inward toward axis 58, connectors 56 extend from the curved inner annular surface of frame 54 inward to intersect the straight sides of dental devices 10 at an angle of about 90°. It is contemplated that dental devices 10 could still be nested (e.g., organized in rows and/or columns) within frame 54, if desired. It is further contemplated that connectors 56 could still be oriented radially inward, even with straight dental devices 10, such that connectors 56 would intersect dental devices 10 at oblique angles.

Frame 54 shown in the exemplary embodiments of Figs. 7-9 may additionally have a different and/or extra reference feature 70 not shown in the other embodiments. For example, frame 54 of Figs. 7-9 may include only a single axial end face, with feature 70 being located at an opposing side. Feature 70 may be an annular protrusion (e.g., a V-shaped ridge) that helps to position workpiece 28 within recess 50 of machine 22. It is contemplated that feature 70 may be used alone or in any combination with features 60-64, as desired.

In some exemplary embodiments, because of an intended location of dental devices 10 within the patient's mouth, because of a size and/or contour of the patient's mouth, and/or because of existing dentistry in the patients mouth, it may be difficult to insert fasteners into or through dental devices 10 for securing thereof. For this reason, in some exemplary embodiments, particular dental devices 10 (shown in cross-section in Fig. 9) may be formed with an internal fastener 72. That is, fastener 72 may be sintered layer-by-layer along with dental device 10. External surfaces of fastener 72 may be spaced apart from internal surfaces of bore 68, and only connected to dental device 10 via a limited number of small connectors (not shown). During installation of this dental device 10, a tool may be placed into bore 68 to engage fastener 72 and rotation of the tool may cause the small connectors to break. After breakage of the small connectors, fastener 72 may then be rotated to advance partially out of bore 68 and into the patient's underlying bone structure or into an implant or an abutment, thereby securing dental device 10 in place. In cases where, for technical or aesthetic reasons, bore 68 needs to be manufactured at an angle, the integral manufacturing of fastener 72 may offer more flexibility in the design of bore 68. For example, the integral fastener 68 may not require clearance above a seat region normally required for insertion of a separate fastener into bore 68.

### Industrial Applicability

The disclosed workpiece, system, and method may be used to manufacture a wide range of dental devices in an efficient and accurate manner. Efficiency may be achieved through the use of frame 54, which may be designed and fabricated to save space, material, time within machine 20, and loading time of machine 22. Accuracy may be achieved through the use of a stable support provided by frame 54, the simultaneous manufacture of frame 54 and dental devices 10, and the use of reference features 60-64 and/or 70. Operation of system 12 will now be described in detail.

At a start of a manufacturing event, information regarding workpiece 28 may be loaded into controller 26 (referring to Fig. 4), as is known in the art. This information may include a shape, a size, a contour, etc. of dental devices 10, frame 54, and/or connectors 56. In some applications, a pre-fabricated frame 54 may then be loaded into build chamber 30 of machine 20. In other applications, frame 54 may be fabricated simultaneous with the fabrication of dental devices 10 and connectors 56. Regardless of whether frame 54 is prefabricated or co-fabricated, the component information may be used to control operation of build chamber 30, material chamber 32, recoater 34, and energy source 36. For example, platform 40 may be lowered in an amount corresponding to a desired thickness of a first layer of dental device(s) 10. At about the same time, platform 42 may be raised by at least this same thickness. Thereafter, recoater 34 may be driven by associated actuator(s) to push material protruding from material chamber 32 above a lower edge of the corresponding recoater into build chamber 30. The material may be spread across platform 40 in a relatively consistent and well-distributed manner. Thereafter, energy source 36 may be activated to sinter the powdered material in a pattern corresponding to the size, shape, and/or contour of workpiece 28 at the particular height above platform 40. Platform 40 may then be lowered by a thickness of a second layer of device(s) 10, and the process may be repeated.

Once all layers of workpiece 28 have solidified, any powdered material around dental device 10 may be removed (e.g., brushed away, vacuumed up, etc.). Transfer machine 24 may then transport workpiece 28 from machine 20 to machine 22, and place workpiece 28 in a desired location inside of recess 50. In some exemplary embodiments, workpiece 28 may need to be oriented in a particular way before milling of dental devices 10 can begin. This may include, for example, aligning particular reference features 60-64 and/or 70 of workpiece 28 with corresponding features in recess 50. In another example, workpiece 28 may be loaded into a recess in any desired manner, but the resulting orientation may need to be detected thereafter. This assumed and/or known location and orientation information may then be used by controller 26 to regulate operation of cutter 44. Cutter 44 may be controlled to remove excess material from select surfaces of the base forms of dental devices 10, thereby creating final forms that may be installed within the patient's mouth. In some exemplary embodiments, cutter 44 may need greater access to the base forms of dental devices 10 than is possible when frame 54 completely surrounds dental devices 10. When this situation is known to exist, a partial frame 54 may be utilized, such that cutter 44 may access dental devices 10 via a break or space in the periphery of frame 54. Connectors 56 may be broken away, cut away, eroded away, or otherwise removed after completion of dental devices 10 and prior to installation within the patient's mouth.

It will be apparent to those skilled in the art that various modifications and variations can be made to the disclosed workpiece, system, and method. Other embodiments will be apparent to those skilled in the art from consideration of the specification and practice of the disclosed workpiece, system, and method. It is intended that the specification and examples be considered as exemplary only, with a true scope being indicated by the following claims.

## Claims

1. A single workpiece (28) for manufacturing a dental device (10), comprising:
a ring-shaped frame (54);
an additively manufactured base form of the dental device (10) inside the ring-shaped frame (54), wherein material has been removed from select surfaces of the base form;
an additively manufactured template (18) inside the ring-shaped frame (54) for use in installing the dental device (10) in the mouth of the particular patient and
at least one connector (56) extending between the base form and the ring-shaped frame (54), wherein
the dental device (10) is configured for a particular patient and is a superstructure (14) or a substructure (16) configured to provide mounting for the superstructure (14).

2. The single workpiece (28) of claim 1, wherein:
the base form has a convex curvature oriented toward the ring-shaped frame (54);
the dental device is a first dental device;
the at least one connector (56) includes at least a first connector (56); and
the workpiece (28) further includes:
a base form of at least a second dental device (10) nested inside the base form of the first dental device (10); and
at least a second connector (56) extending between the base form of the first dental device and the base form of the at least a second dental device (10).

3. The single workpiece (28) of any of the preceding claims, wherein the ring-shaped frame (54) extends only partially around the base form for the dental device (10), wherein the ring-shaped frame (54) is manufactured from a first material different than a second material of the base form.

4. The single workpiece (28) of any of the preceding claims, further including at least one reference feature (70) associated with the ring-shaped frame (54).

5. The single workpiece (28) of the preceding claims, wherein the at least one reference feature includes:
at least a first reference feature (70) for positioning the workpiece (28) for subsequent machining; and
at least a second reference feature (70) having a configuration different from the at least a first reference feature (70) and for recognizing an orientation of the workpiece (28) during the subsequent machining.

6. The single workpiece (28) of any of the two preceding claims, wherein the at least one reference feature (70) includes a plurality of reference features (60 - 64) equally-spaced around a perimeter of the ring-shaped frame.

7. A method for manufacturing a dental device (10), comprising:
additively manufacturing a base form of the dental device (10) inside of a ring-shaped frame (54);
additively manufacturing a template (18) inside the ring-shaped frame (54) for use in installing the dental device (10) in the mouth of the particular patient;
transferring the base form and the ring-shaped frame (54) as a single workpiece (28) into a removal machine (22);
removing material from select surfaces of the base form while the single workpiece (28) is inside the removal machine (22);
fabricating at least one connector (56) between the base form and the ring-shaped frame (54), wherein
the dental device (10) is configured for a particular patient and is a superstructure (14) or a substructure (16) configured to provide mounting for the superstructure (14).

8. The method of the preceding method claim, wherein additively manufacturing the base form includes sintering the base form from a powdered metal, further including sintering at least one connector (56) between the base form and the ring-shaped frame (54), further including sintering the ring-shaped frame (54) together with the base form and the at least one connector (56), further including prefabricating the ring-shaped frame (54) via a non-additive process prior to sintering of the base form inside the ring-shaped frame (54), wherein removing material from select surfaces of the base form includes removing material from at least a portion of the base form via an opening through a periphery of the ring-shaped frame (54).

9. The method of any of the preceding method claims, further including additively manufacturing a reference feature (70) associated with the ring-shaped frame (54) for use in placing the base form before removing material from select surfaces of the base form.

10. The method of the preceding claim, further including the step of transferring the base form and the ring-shaped frame (54) from the additive machine (20) to the removal machine (22) based on the location of the reference feature.

11. The method of any of the preceding claims, wherein removing material from select surfaces of the base form includes removing material from only an implant abutment surface or a fastener engagement surface, further including additively manufacturing a threaded fastener inside the base form, wherein the base form is laser sintered inside the ring-shaped frame (54) from a powdered metal, and/or wherein the ring-shaped frame (54) is manufactured via a non-additive process, prior to manufacturing of the base form.

12. A system for manufacturing a dental device (10) according to the method of any of the preceding method claims, comprising:
an additive machine (20) and a controller (26) configured to control operations of the additive machine (20) to additively manufacture a base form of the dental device (10) inside of a ring-shaped frame (54) and to additively manufacture a template (18) inside the ring-shaped frame (54) for use in installing the dental device (10) in the mouth of the particular patient; and
a removal machine (22) configured to receive the ring-shaped frame (54) and a controller (26) configured to control operations of the removal machine (22) to remove material from select surfaces of the base form to produce the dental device (10), wherein
the controller (26) of the additive machine (20) and/or a controller (26) of the removal machine (22) is configured for fabricating at least one connector (56) between the base form and the ring-shaped frame (54), and
the dental device (10) is configured for a particular patient and is a superstructure (14) or a substructure (16) configured to provide mounting for the superstructure (14).

13. The system of any of the preceding system claims, wherein the additive machine (20) is configured to manufacture at least a portion of the base form via an opening through a periphery of the ring-shaped frame (54).

14. The system of any of the preceding system claims, wherein the additive machine (20) is configured to manufacture a reference feature (70) associated with the ring-shaped frame (54) for placing the base form inside the removal machine (22) or detecting an orientation of the base form inside the removal machine (22).

15. The system of the preceding system claim, further including a transfer machine (24) configured to transfer the base form and the ring-shaped frame (54) from the additive machine (20) to the removal machine (22) based on a location of the reference feature (70).

## Patentansprüche

1. Einzelnes Werkstück (28) zum Herstellen einer Dentalvorrichtung (10), mit:
einem ringförmigen Rahmen (54);
einer additiv hergestellten Grundform der Dentalvorrichtung (10) innerhalb des ringförmigen Rahmens (54), wobei Material von ausgewählten Oberflächen der Grundform entfernt worden ist;
einer additiv hergestellten Schablone (18) im Inneren des ringförmigen Rahmens (54) zur Verwendung beim Installieren der Dentalvorrichtung (10) im Mund eines bestimmten Patienten; und
mindestens einem Verbinder (56), der sich zwischen der Grundform und dem ringförmigen Rahmen (54) erstreckt, wobei
die Dentalvorrichtung (10) für einen bestimmten Patienten konfiguriert ist und eine Überstruktur (14) oder eine Unterstruktur (16) ist, die dafür konfiguriert ist, eine Halterung für die Überstruktur (14) bereitzustellen.

2. Einzelnes Werkstück (28) nach Anspruch 1, wobei:
die Grundform eine konvexe Krümmung aufweist, die in Richtung zum ringförmigen Rahmen (54) ausgerichtet ist;
die Dentalvorrichtung eine erste Dentalvorrichtung ist;
der mindestens eine Verbinder (56) mindestens einen ersten Verbinder (56) aufweist; und
das Werkstück (28) ferner aufweist:
eine Grundform mindestens einer zweiten Dentalvorrichtung (10), die innerhalb der Grundform der ersten Dentalvorrichtung verschachtelt angeordnet ist; und
mindestens einen zweiten Verbinder (56), der sich zwischen der Grundform der ersten Dentalvorrichtung und der Grundform der mindestens einen zweiten Dentalvorrichtung (10) erstreckt.

3. Einzelnes Werkstück (28) nach einem der vorhergehenden Ansprüche, wobei sich der ringförmige Rahmen (54) nur teilweise um die Grundform für die Dentalvorrichtung (10) erstreckt, wobei der ringförmige Rahmen (54) aus einem ersten Material hergestellt ist, das sich von einem zweiten Material der Grundform unterscheidet.

4. Einzelnes Werkstück (28) nach einem der vorhergehenden Ansprüche, ferner mit mindestens einem Referenzmerkmal (70), das dem ringförmigen Rahmen (54) zugeordnet ist.

5. Einzelnes Werkstück (28) nach einem der beiden vorhergehenden Ansprüche, wobei das mindestens eine Referenzmerkmal aufweist:
mindestens ein erstes Referenzmerkmal (70) zum Positionieren des Werkstücks (28) für eine nachfolgende maschinelle Bearbeitung; und
mindestens ein zweites Referenzmerkmal (70) mit einer Konfiguration, die sich von derjenigen des mindestens einen ersten Referenzmerkmals (70) unterscheidet, und zum Erfassen einer Ausrichtung des Werkstücks (28) während der nachfolgenden maschinellen Bearbeitung.

6. Einzelnes Werkstück (28) nach einem der beiden vorhergehenden Ansprüche, wobei das mindestens eine Referenzmerkmal (70) mehrere Referenzmerkmale (60 - 64) enthält, die gleichmäßig um einen Umfang des ringförmigen Rahmens verteilt sind.

7. Verfahren zum Herstellen einer Dentalvorrichtung (10), mit den Schritten:
additives Herstellen einer Grundform der Dentalvorrichtung (10) innerhalb eines ringförmigen Rahmens (54);
additives Herstellen einer Schablone (18) innerhalb des ringförmigen Rahmens (54) zur Verwendung beim Installieren der Dentalvorrichtung (10) im Mund eines bestimmten Patienten;
Übertragen der Grundform und des ringförmigen Rahmens (54) als ein einzelnes Werkstück (28) in einer Entfernungsmaschine (22);
Entfernen von Material von ausgewählten Oberflächen der Grundform, während sich das einzelne Werkstück (28) innerhalb der Entfernungsmaschine (22) befindet; und
Herstellen mindestens eines Verbinders (56) zwischen der Grundform und dem ringförmigen Rahmen (54),
wobei die Dentalvorrichtung (10) für einen bestimmten Patienten konfiguriert ist und eine Überstruktur (14) oder eine Unterstruktur (16) ist, die dafür konfiguriert ist, eine Halterung für die Überstruktur (14) bereitzustellen.

8. Verfahren nach dem vorhergehenden Verfahrensanspruch, wobei das additive Herstellen der Grundform das Sintern der Grundform aus einem pulverförmigen Metall aufweist und ferner das Sintern mindestens eines Verbinders (56) zwischen der Grundform und dem ringförmigen Rahmen (54), das Sintern des ringförmigen Rahmens (54) zusammen mit der Grundform und dem mindestens einen Verbinder (56) und ferner das Vorfertigen des ringförmigen Rahmens (54) durch einen nichtadditiven Prozess vor dem Sintern der Grundform innerhalb des ringförmigen Rahmens (54) aufweist, wobei das Entfernen von Material von ausgewählten Oberflächen der Grundform das Entfernen von Material von mindestens einem Teil der Grundform über eine Öffnung durch einen Umfang des ringförmigen Rahmens (54) aufweist.

9. Verfahren nach einem der vorhergehenden Verfahrensansprüche, ferner mit dem additiven Herstellen eines Referenzmerkmals (70), das dem ringförmigen Rahmen (54) zugeordnet ist, zur Verwendung beim Platzieren der Grundform, bevor Material von ausgewählten Oberflächen der Grundform entfernt wird.

10. Verfahren nach dem vorhergehenden Anspruch, ferner mit dem Schritt zum Übertragen der Grundform und des ringförmigen Rahmens (54) von der additiven Maschine (20) zur Entfernungsmaschine (22) basierend auf der Position des Referenzmerkmals.

11. Verfahren nach einem der vorhergehenden Ansprüche, wobei das Entfernen von Material von ausgewählten Oberflächen der Grundform das Entfernen von Material nur von einer Implantatanliegefläche oder einer Befestigungseingriffsfläche aufweist, ferner mit dem additiven Herstellen eines Gewindebefestigungselements innerhalb der Grundform, wobei die Grundform innerhalb des ringförmigen Rahmens (54) aus einem pulverförmigen Metall lasergesintert wird und/oder wobei der ringförmige Rahmen (54) durch einen nichtadditiven Prozess vor dem Herstellen der Grundform hergestellt wird.

12. System zum Herstellen einer Dentalvorrichtung (10) gemäß dem Verfahren nach einem der vorhergehenden Verfahrensansprüche, mit:
einer additiven Maschine (20) und einer Steuereinheit (26), die dafür konfiguriert ist, Operationen der additiven Maschine (20) zu steuern, um eine Grundform der Dentalvorrichtung (10) innerhalb eines ringförmigen Rahmens (54) additiv herzustellen und eine Schablone (18) innerhalb des ringförmigen Rahmens (54) zur Verwendung beim Installieren der Dentalvorrichtung (10) im Mund eines bestimmten Patienten additiv herzustellen; und
einer Entfernungsmaschine (22), die dafür konfiguriert ist, den ringförmigen Rahmen (54) und eine Steuereinheit (26) aufzunehmen, die dafür konfiguriert ist, Operationen der Entfernungsmaschine (22) zu steuern, um Material von ausgewählten Oberflächen der Grundform zu entfernen, um die Dentalvorrichtung (10) herzustellen,
wobei die Steuereinheit (26) der additiven Maschine (20) und/oder eine Steuereinheit (26) der Entfernungsmaschine (22) dafür konfiguriert ist, mindestens einen Verbinder (56) zwischen der Grundform und dem ringförmigen Rahmen (54) herzustellen, und
die Dentalvorrichtung (10) für einen bestimmten Patienten konfiguriert ist und eine Überstruktur (14) oder eine Unterstruktur (16) ist, die dafür konfiguriert ist, eine Halterung für die Überstruktur (14) bereitzustellen.

13. System nach einem der vorhergehenden Systemansprüche, wobei die additive Maschine (20) dafür konfiguriert ist, mindestens einen Teil der Grundform über eine Öffnung durch einen Umfang des ringförmigen Rahmens (54) herzustellen.

14. System nach einem der vorhergehenden Systemansprüche, wobei die additive Maschine (20) dafür konfiguriert ist, ein Referenzmerkmal (70) herzustellen, das dem ringförmigen Rahmen (54) zugeordnet ist, um die Grundform innerhalb der Entfernungsmaschine (22) zu platzieren oder eine Ausrichtung der Grundform innerhalb der Entfernungsmaschine (22) zu erfassen.

15. System nach dem vorhergehenden Systemanspruch, ferner mit einer Übertragungsmaschine (24), die dafür konfiguriert ist, die Grundform und den ringförmigen Rahmen (54) basierend auf einer Position des Referenzmerkmals (70) von der additiven Maschine (20) zur Entfernungsmaschine (22) zu übertragen.

## Revendications

1. Pièce (28) unique pour fabriquer un dispositif dentaire (10) comprenant :
un cadre de forme annulaire (54) ;
une forme de base du dispositif dentaire (10) fabriquée de manière additive à l'intérieur du cadre de forme annulaire (54),
où de la matière a été enlevée de surfaces sélectionnées de la forme de base ;
un gabarit (18) fabriqué de manière additive à l'intérieur du cadre de forme annulaire (54) pour une utilisation dans la mise en place du dispositif dentaire (10) dans la bouche du patient donné, et
au moins un raccord (56) se prolongeant entre la forme de base et le cadre de forme annulaire (54), où le dispositif dentaire (10) est configuré pour un patient donné et est une superstructure (14), ou une infrastructure (16) configurée pour assurer la fixation de la superstructure (14).

2. Pièce (28) unique selon la revendication 1, dans laquelle :
la forme de base possède une courbure convexe orientée vers le cadre de forme annulaire (54) ;
le dispositif dentaire est un premier dispositif dentaire ;
l'au moins un raccord (56) comprend au moins un premier raccord (56) ; et
la pièce (28) comprend en outre :
une forme de base d'au moins un deuxième dispositif dentaire (10) imbriquée à l'intérieur de la forme de base du premier dispositif dentaire (10) ; et
au moins un deuxième raccord (56) se prolongeant entre la forme de base du premier dispositif dentaire et la forme de base de l'au moins un deuxième dispositif dentaire (10).

3. Pièce (28) unique selon l'une quelconque des revendications précédentes, dans laquelle le cadre de forme annulaire (54) se prolonge en partie seulement autour de la forme de base pour le dispositif dentaire (10), où le cadre de forme annulaire (54) est fabriqué à partir d'un premier matériau différent d'un deuxième matériau de la forme de base.

4. Pièce (28) unique selon l'une quelconque des revendications précédentes, comprenant en outre au moins un élément de référence (70) associé au cadre de forme annulaire (54).

5. Pièce (28) unique selon les revendications précédentes, dans laquelle l'au moins un élément de référence comprend :
au moins un premier élément de référence (70) pour positionner la pièce (28) pour un façonnage ultérieur ; et
au moins un deuxième élément de référence (70) ayant une configuration différente de l'au moins un premier élément de référence (70) et destiné à reconnaitre l'orientation de la pièce (28) au cours du façonnage ultérieur.

6. Pièce (28) unique selon l'une quelconque des deux revendications précédentes, dans laquelle l'au moins un élément de référence (70) comprend une pluralité d'éléments de référence (60 à 64) disposés à égale distance autour du périmètre du cadre de forme annulaire.

7. Procédé de fabrication d'un dispositif dentaire (10), comprenant :
la fabrication de manière additive d'une forme de base du dispositif dentaire (10) à l'intérieur d'un cadre de forme annulaire (54) ;
la fabrication de manière additive d'un gabarit (18) à l'intérieur du cadre de forme annulaire (54) destiné à être utilisé lors de l'installation du dispositif dentaire (10) dans la bouche d'un patient donné ;
le transfert de la forme de base et du cadre de forme annulaire (54) comme formant une pièce (28) unique dans une machine par enlèvement (22) ;
l'enlèvement du matériau des surfaces sélectionnées de la base de forme pendant que la pièce (28) unique se trouve à l'intérieur de la machine par enlèvement (22) ;
la fabrication d'au moins un raccord (56) entre la forme de base et le cadre de forme annulaire (54),
où
le dispositif dentaire (10) est configuré pour un patient donné et est une superstructure (14) ou une infrastructure (16) configurée pour assurer la fixation de la superstructure (14).

8. Procédé selon la revendication précédente de procédé, dans lequel la fabrication de manière additive de la forme de base comprend le frittage de la forme de base à partir d'un métal pulvérulent, comprenant en outre le frittage d'au moins un raccord (56) entre la forme de base et le cadre de forme annulaire (54), comprenant en outre le frittage du cadre de forme annulaire (54) associé avec la forme de base et l'au moins un raccord (56), comprenant en outre la préfabrication du cadre de forme annulaire (54) par le biais d'un procédé non additif préalablement au frittage de la forme de base à l'intérieur du cadre de forme annulaire (54), où l'enlèvement du matériau de surfaces sélectionnées de la forme de base comprend l'enlèvement du matériau à partir d'au moins une partie de la forme de base par le biais d'une ouverture à travers un pourtour du cadre de forme annulaire (54).

9. Procédé selon l'une quelconque des revendications précédentes de procédé, comprenant en outre la fabrication de manière additive d'un élément de référence (70) associé au cadre de forme annulaire (54) destiné à être utilisé pour placer la forme de base avant d'enlever le matériau des surfaces sélectionnées de la forme de base.

10. Procédé selon la revendication précédente, comprenant en outre l'étape de transfert de la forme de base et du cadre de forme annulaire (54) de la machine de travail additive (20) vers la machine par enlèvement (22) en fonction de l'emplacement de l'élément de référence.

11. Procédé selon l'une quelconque des revendications précédentes, dans lequel l'enlèvement du matériau des surfaces sélectionnées de la forme de base comprend uniquement l'enlèvement du matériau d'une surface d'appui d'un implant ou d'une surface d'engagement d'un élément de fixation, comprenant en outre la fabrication de manière additive d'un élément de fixation fileté à l'intérieur de la forme de base, où la forme de base est formée par frittage laser à l'intérieur du cadre de forme annulaire (54) à partir d'un métal pulvérulent, et/ou où le cadre de forme annulaire (54) est fabriqué au moyen d'un procédé non additif, préalablement à la fabrication de la forme de base.

12. Système de fabrication d'un dispositif dentaire (10) d'après le procédé selon l'une quelconque des revendications précédentes de procédé, comprenant :
une machine de travail additive (20) et un dispositif de commande (26) configuré pour commander les opérations de la machine de travail additive (20) pour fabriquer de manière additive une forme de base du dispositif dentaire (10) à l'intérieur d'un cadre de forme annulaire (54) et pour fabriquer de manière additive un gabarit (18) à l'intérieur du cadre de forme annulaire (54) destiné à être utilisé lors de l'installation du dispositif dentaire (10) dans la bouche d'un patient donné ; et
une machine par enlèvement (22) configurée pour recevoir le cadre de forme annulaire (54) et un dispositif de commande (26) configuré pour commander les opérations de la machine par enlèvement (22) pour enlever le matériau des surfaces sélectionnées de la forme de base pour obtenir le dispositif dentaire (10), où
le dispositif de commande (26) de la machine de travail additive (20), et/ou un dispositif de commande (26) de la machine par enlèvement (22), est configuré pour fabriquer au moins un raccord (56) entre la forme de base et le cadre de forme annulaire (54), et
le dispositif dentaire (10) est configuré pour un patient donné et est une superstructure (14) ou une infrastructure (16) configurée pour assurer la fixation de la superstructure (14).

13. Système selon l'une quelconque des revendications précédentes de système, dans lequel la machine de travail additive (20) est configurée pour fabriquer au moins une partie de la forme de base par le biais d'une ouverture à travers le pourtour du cadre de forme annulaire (54).

14. Système selon l'une quelconque des revendications précédentes de système, dans lequel la machine de travail additive (20) est configurée pour fabriquer un élément de référence (70) ) associé au cadre de forme annulaire (54) pour placer la forme de base à l'intérieur de la machine par enlèvement (22), ou détecter l'orientation de la forme de base à l'intérieur de la machine par enlèvement (22).

15. Système selon la revendication précédente de système, comprenant en outre une machine de transfert (24) configurée pour transférer la forme de base et le cadre de forme annulaire (54) de la machine de travail additive (20) vers la machine par enlèvement (22) en fonction de l'emplacement de l'élément de référence (70).
